# EUROPEAN PATENT SPECIFICATION

(11) **EP 0 563 394 B1**
(45) Date of publication and mention of the grant of the patent: **05.08.1998**
(21) Application number: 92920908.8
(22) Date of filing: 30.09.1992
(51) Int. Cl.: H01M 4/26, H01M 4/62

(54) **USE OF A MACROMOLECULAR COMPOUND FOR MAKING A DEPOLARIZING MIXTURE**
VERWENDUNG EINER MAKROMOLEKULAREN VERBINDUNG ZUR HERSTELLUNG EINES DEPOLARISIERENDEN GEMISCHES
UTILISATION D'UN COMPOSE MACROMOLECULAIRE POUR LA FABRICATION D'UN MELANGE DEPOLARISANT

(30) Priority: 09.10.1991 JP 290511/91
(43) Date of publication of application: 06.10.1993
(73) Proprietor: YUASA CORPORATION, Takatsuki-shi, Osaka 569 (JP)
(72) Inventor: NAKAJIMA, Yasumasa, Takatsuki-shi, Osaka 569 (JP); IZUCHI, Syuichi, Takatsuki-shi, Osaka 569 (JP); IMACHI, Hiroshi, Takatsuki-shi, Osaka 569 (JP); FUKUTOME, Hiroyuki, Takatsuki-shi, Osaka 569 (JP)
(74) Representative: Stoner, Gerard Patrick
(86) International application number: PCT/JP92/01252
(87) International publication number: WO 93/07648

(56) References cited:
- EP-A- 0 302 206
- EP-A- 0 343 408
- EP-A- 0 421 660
- JP-A-54 099 941
- PATENT ABSTRACTS OF JAPAN, vol. 13, no. 578 (E-864), 20 December 1989

## Description

This invention relates to the manufacture of cathode composites for use in primary and secondary batteries.

### Background

Known lithium batteries include primary and secondary batteries in which a chalcogen compound is used for the positive active material and metallic lithium is used as the anode. This type of battery generally has a cathode including a cathode composite, an anode including metallic lithium forming the negative active material, and a separator. Manufacture is generally by laying the cathode on the anode with the separator between and housing this laminate in a battery can, or between plates sealed around the edge with a sealing agent. Particles of the positive active material, particles of carbon such as carbon black forming a conductive agent, polytetrafluoroethylene or solid polymer electrolyte serving as a binder and organic solvent serving as a diluent are mixed to a paste and filled in or applied onto a substrate such as stainless steel net or stainless steel plate to form the cathode composite. The anode is formed by sticking a metallic lithium sheet onto a stainless steel plate, or is composed of the metallic lithium sheet alone.

However, there are problems. When mixing the paste the positive active material and conductive agent tend to cohere and be poorly wetted by the binder and organic solvent. For this reason uniform mixing is difficult, uniform application on the substrate is also difficult and furthermore the surface of the cathode composite tends to become corrugated. With the positive active material, conductive agent and binder not being uniformly dispersed the cathode composition sometimes cracks or peels off the substrate. In addition, initial capacity is small compared with theoretical capacity in primary batteries while in secondary batteries capacity is less than half of the initial capacity after 100 cycles. Furthermore the cathode composite may have convex surface portions which sometimes break the separator, reach the anode and cause short-circuiting.

In the prior art, US-A-4940553/EP-A-343408 disclose the use of soluble salts of polyphosphoric and polyphosphonic acids as dispersant for nickel hydroxide in an aqueous nickel hydroxide paste for filling into a porous electrode substrate.

US-A-4865927/EP-A-302206 describe the use of nitrogen-containing heterocycles such as phenanthroline and pyridinecarboxylic acids as complexing agents to avoid the formation of surface films on a nickel-plated current collector which contacts a cathode composite of manganese dioxide, conductive agent (e.g. carbon black) and binder in an alkaline cell.

JP-A-1/243372 describes the use of (inter alia) poly-2-vinylpyridine as a binding resin on a positive electrode current collector, in a composition including carbon black.

An aim herein is to provide a cathode composite in which cracking, peeling-off from a substrate and short-circuiting can be avoided, a good discharge characteristic is available in a primary battery, and a good charge/discharge characteristic is available in a secondary battery.

The invention is the use, in the manufacture of a cathode composite comprising a mixture of
(a) a particulate positive active compound;
(b) a particulate conductive agent; and
(c) a binder for the positive active agent and conductive agent particles, the binder comprising solid polymeric electrolyte material,
of (d), a polar macromolecular compound including pyridine ring, as a dispersant to aid dispersal of the positive active compound and conductive agent particles in the binder before solidification thereof.

With the nitrogen heteroatom, a bias is produced in the entire electron cloud of the compound so that it is a polar molecule.

The function as a dispersant prevents particles of solid from cohering or precipitating in liquid.

The compound is adsorbed to surfaces of the positive active material and the conductive agent and sterically stabilized, so as to prevent the positive active material and the conductive agent from cohering and thereby improve wetting of the positive active material and the conductive agent by the organic solvent and the binder. The positive active material, conductive agent and binder are therefore dispersed uniformly and can be applied on the substrate evenly. A cathode composite having a uniform, non-corrugated surface can be obtained. Accordingly cracking, peeling-off from the substrate and short-circuiting can be prevented. A good discharge characteristic is available when the cathode composite is used for a primary battery, and a good charge/discharge characteristic is available when it is used for a secondary battery.

For the positive active material, MnO₂ may be mentioned for primary batteries and MoO_{3,} V₂O₅, V₆O₁₃, LiV₃O₈, LiMn₂O₄, LiCoO₂, LiCrO₂ and LiNiO₂ for secondary batteries.

Embodiments are now described with reference to the drawings, in which:
Fig 1 is a schematic vertical sectional view showing a battery structure;
Fig 2 is a diagram showing initial discharge characteristics of Embodiment 1 and Comparison Example 1;
Fig 3 is a diagram showing energy densities per volume of the batteries of Embodiment 1 and Comparison Example 1; and
Fig 4 is a diagram showing charge/discharge cycle characteristics of Embodiment 2 and Comparison Example 2. [Parts are by weight].

### Embodiment 1

15 parts of MnO₂ as positive active material for a primary battery, 1.5 parts of acetylene black as conductive agent, 4 parts of electrolyte material as binder, 0.75 parts of poly-2-vinylpyridine (molecular weight: 150,000) shown by the following formula (I) as dispersant, 10 parts of benzene as diluent and 0.08 weight part of azobisisobutyronitrile as reaction initiator were mixed to prepare a paste for a cathode composite. 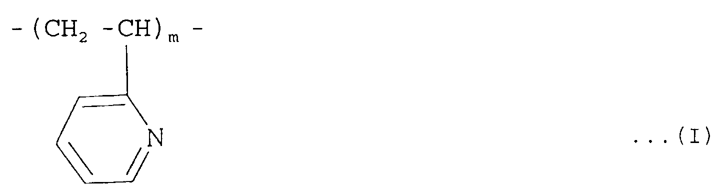 A mixture of monoacrylate of ethylene oxide, diacrylate of ethylene oxide and triacrylate of ethylene oxide, with molecular weights of about 200, was dissolved in propylene carbonate solution containing lithium perchlorate at a concentration of 2 mol/l to prepare the electrolyte material.

The prepared paste was cast onto a stainless steel substrate and left for 1 hour at 100°C in an atmosphere of inert gas to cure, giving a sheet-shaped cathode composite on the stainless steel substrate. Thickness of the prepared cathode composite was 50µm average, 53µm maximum and 47µm minimum.

Next, 0.05 parts of azobisisobutyronitrile were dissolved in 10 parts of the above electrolyte material and this solution was cast on the cathode composite and cured in the same way as above, so that an electrolyte film was formed on the cathode composite. The thickness of the prepared electrolyte film was 20µm.

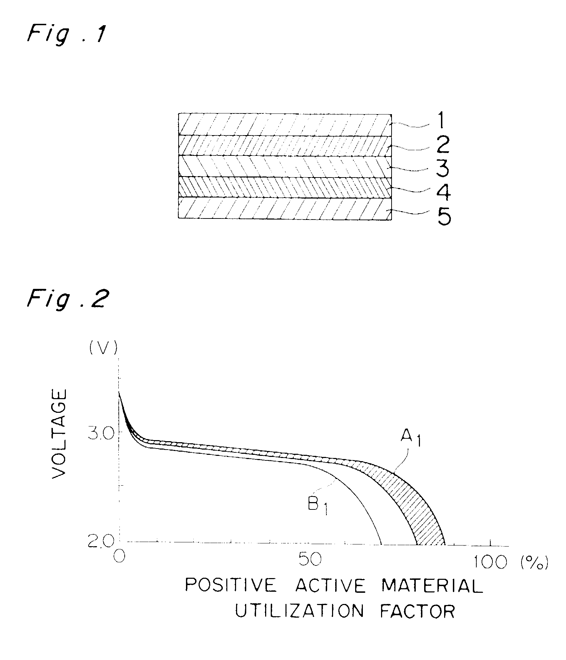

The composite sheet thus prepared comprising the stainless steel substrate, the cathode composite and the electrolyte film was cut to a square piece 10 x 10mm. Metallic lithium 100µm thick was attached onto the electrolyte film as an anode, so as to make up a battery having a structure shown in Fig 1, that is, a stainless steel substrate 1, a cathode composite 2, an electrolyte film 3, an anode 4 and another stainless steel substrate 5.

A load of 1kg/cm² was applied to the prepared battery and an initial discharge test done under this condition, at 25°C with a constant current of 0.1 mA/cm². As a result, a cathode utilization factor of 85% was obtained. The filling rate of active material per volume of cathode composite was 35 vol%.

A dispersant of the above formula (I) with a molecular weight in the range 10000 to 250000 may be used.

### Comparison Example 1

A battery was made up in the same way as Embodiment 1 except that the dispersant was not used.

Cohering particles of MnO₂ and acetylene black formed on the cathode composite of the prepared battery, and there was a part having a thickness reaching 500µm. The thickness of the cathode composite at parts other than where the cohering particles were formed was 61µm average, 72µm maximum and 51µm minimum.

An initial discharge test as above was done on the prepared battery, and a cathode utilization factor of 70% was obtained. In a discharge test after preservation for 40 days at 60°C, a cathode utilization factor of 45% was obtained. The filling rate of active material per volume of cathode composite was 23 vol%.

Fig 2 is a diagram showing the initial discharge characteristics of Embodiment 1 and Comparison Example 1. In Fig 2, A₁ shows the initial discharge characteristic of Embodiment 1 and B₁ shows the initial discharge characteristic of Comparison Example 1.

As seen from this diagram, the discharge characteristics of Embodiment 1 were better than those of Comparison Example 1.

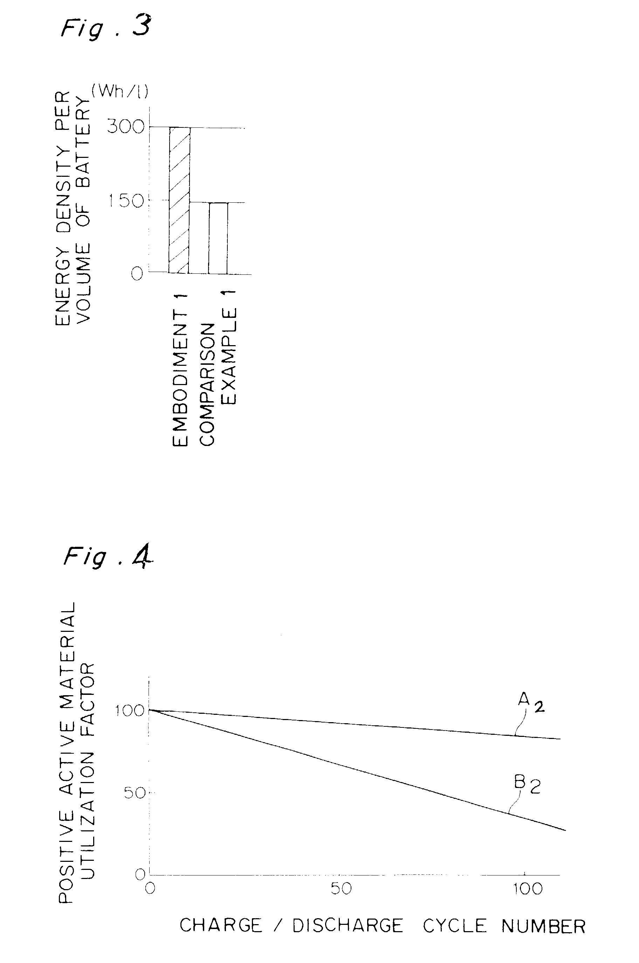

Fig 3 shows energy/volume densities of batteries of Embodiment 1 and Comparison Example 1. The energy/volume density of Embodiment 1 was better than that of the Comparison Example 1.

### Embodiment 2

15 parts of LiMn₂O₄ as positive active material for a secondary battery, 1.5 parts of acetylene black as conductive agent, 4 parts of electrolyte material as binder, 0.75 parts of poly-4-vinylpyridine (molecular weight 140000) of the following formula (II) as dispersant, 10 parts of benzene as diluent and 0.08 parts of azobisisobutyronitrile as reaction initiator were mixed to prepare a paste for a cathode composite.

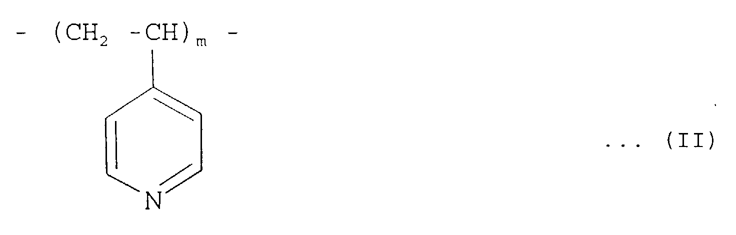

A mixture of monoacrylate of ethylene oxide, diacrylate of ethylene oxide and triacrylate of ethylene oxide, with molecular weights of about 200, was dissolved in propylene carbonate solution containing lithium hexafluoro-arsenate at a concentration of 2 mol/l to prepare the electrolyte material.

The prepared paste was cast onto a stainless steel substrate and left for 1 hour at 100°C in an atmosphere of inert gas to cure, giving a sheet-shaped cathode composite on the stainless steel substrate. The thickness of the prepared cathode composite was 50µm average, 54µm maximum and 45µm minimum.

Next, 0.05 parts of azobisisobutyronitrile were dissolved in 10 parts of the above electrolyte material and this solution was cast on the cathode composite and cured in the same way as above, so that an electrolyte film was formed on the cathode composite. A thickness of the prepared electrolyte film was 20µm.

The composite sheet thus prepared comprising the stainless steel substrate, the cathode composite and the electrolyte film was cut to a square piece 10 x 10mm. Metallic lithium 100µm thick was attached onto the electrolyte film as an anode so as to make up a battery having the Fig 1 structure.

A load of 1kg/cm² was applied to the prepared battery and a charge/discharge test done under this condition, at 25°C with a constant current of 0.1 mA/cm². An initial capacity of more than or equal to 80% was maintained even after 100 cycles of charging and discharging. The filling rate of active material per volume of cathode composite was 35 vol%.

A dispersant compound of the above formula (II) with a molecular weight in the range 10000 to 250000 may be used.

### Comparison Example 2

A battery was made up in the same way as Embodiment 2 except that the dispersant was not used.

Cohering particles of LiMn₂O₄ and acetylene black formed on the cathode composite of the prepared battery, and there was a part having a thickness reaching 500µm. The thickness of the cathode composite at parts other than where the cohering particles were formed was 58µm average, 66µm maximum and 49µm minimum.

A charge/discharge test as in Embodiment 2 was done on the prepared battery, and a capacity after 100 cycles of charging and discharging was smaller than or equal to 50% of the initial capacity.

Fig 4 is a diagram showing the charge/discharge cycle characteristic of Embodiment 2 and Comparison Example 2. In Fig 4 A₂ shows the charge/discharge cycle characteristic of Embodiment 2 and B₂ shows the charge/discharge cycle characteristic of Comparison Example 2. As seen, the charge/discharge cycle characteristic of Embodiment 2 is better than that of Comparison Example 2.

As described above, since the cathode composites used in the primary and secondary batteries of Embodiments 1 and 2 include the specified compounds functioning as dispersant, the following effects are obtainable. In the cathode composite, the positive active material and the conductive agent are dispersed uniformly and the surface of sheet-shaped cathode composite becomes smooth, without corrugation. As a result the cracking, peeling-off from the substrate and occurrence of short-circuiting can be prevented. Furthermore the utilization factor of positive active material is improved so that the battery capacity can be increased and good discharge and charge/discharge characteristics are shown. Moreover, the filling density of active material per volume of cathode composite is improved so that the energy density per volume of battery can be made better.

## Claims

1. The use, in the manufacture of a cathode composite comprising a mixture of
(a) a particulate positive active compound;
(b) a particulate conductive agent; and
(c) a binder for the positive active agent and conductive agent particles, the binder comprising solid polymeric electrolyte material,
of (d), a polar macromolecular compound including pyridine ring, as a dispersant to aid dispersal of the positive active compound and conductive agent particles in the binder before solidification thereof.

2. Use according to claim 1 in which the macromolecular compound (d) is poly-2-vinylpyridine or poly-4-vinylpyridine.

3. Use according to claim 1 or claim 2 in which the particulate positive active compound is selected from MnO₂, MoO₃, V₂O₅, V₆O₁₃, LiV₃O₈, LiMn₂O₄, LiCoO₂, LiCrO₂ and LiNiO₂.

4. Use according to any one of the preceding claims in which the conductive agent is carbon black.

5. Use according to any one of the preceding claims, further comprising using the cathode composite in the manufacture of a primary or secondary battery.

## Patentansprüche

1. Verwendung einer polaren, makromolekularen, einen Pyridin-Ring einschließenden Verbindung (d) als Dispergiermittel bei der Herstellung eines Kathoden-Composits, umfassend eine Mischung aus:
(a) einer teilchenförmigen, positiven, aktiven Verbindung;
(b) einem teilchenförmigen, leitfähigen Agens; und
(c) einem Bindemittel für das positive, aktive Agens und die Teilchen des leitfähigen Agens, wobei das Bindemittel festes, polymeres Elektrolyt-Material umfaßt,
um die Verteilung der positiven, aktiven Verbindung und der Teilchen des leitfähigen Agens in dem Bindemittel vor der Verfestigung desselben zu erleichtern.

2. Verwendung gemäß Anspruch 1, wobei die makromolekulare Verbindung (d) Poly-2-vinylpyridin oder Poly-4-vinylpyridin ist.

3. Verwendung gemäß Anspruch 1 oder Anspruch 2, wobei die teilchenförmige, positive, aktive Verbindung aus MnO₂, MoO₃, V₂O₅, V₆O₁₃, LiV₃O₈, LiMn₂O₄, LiCoO₂, LiCrO₂ und LiNiO₂ ausgewählt ist.

4. Verwendung gemäß irgendeinem der vorhergehenden Ansprüche, wobei das leitfähige Agens Ruß ist.

5. Verwendung gemäß irgendeinem der vorhergehenden Ansprüche, die weiterhin die Verwendung des Kathoden-Composits bei der Herstellung einer primären oder sekundären Batterie umfaßt.

## Revendications

1. Utilisation, dans la préparation d'un composite de cathode comprenant un mélange de
(a) un composé actif positif en particules;
(b) un agent conducteur en particules; et
(c) un liant pour les particules d'agent actif positif et d'agent conducteur, le liant comprenant une matière électrolytique polymère solide,
de (d) un composé macromoléculaire polaire comportant des cycles pyridine, en tant que dispersant pour faciliter la dispersion des particules de composé actif positif et d'agent conducteur dans le liant avant la solidification de celui-ci.

2. Utilisation selon la revendication 1, dans laquelle le composé macromoléculaire (d) est de la 2-vinylpyridine ou de la poly-4-vinylpyridine.

3. Utilisation selon la revendication 1 ou la revendication 2, dans lequelle le composé actif positif en particules est choisi parmi MnO₂, MoO₃, V₂O₅, V₆O₁₃, LiV₃O₈, LiMn₂O₄, LiCoO₂, LiCrO₂ et LiNoO₂.

4. Utilisation selon l'une quelconque des revendications précédentes, dans laquelle l'agent conducteur est du noir de carbone.

5. Utilisation selon l'une quelconque des revendications précédentes, comprenant en outre l'utilisation du composite de cathode dans la fabrication d'une pile primaire ou secondaire.
